# EUROPÄISCHE PATENTSCHRIFT

(11) **EP 4 521 058 B1**
(45) Veröffentlichungstag und Bekanntmachung des Hinweises auf die Patenterteilung: **19.08.2026**
(21) Anmeldenummer: 23196235.8
(22) Anmeldetag: 08.09.2023
(51) Int. Cl.: G01B 11/06

(54) **VORRICHTUNG UND VERFAHREN ZUM BESTIMMEN DES BRECHUNGSINDEX UND/ODER DER WANDDICKE EINES GEGENSTANDS**
APPARATUS AND METHOD FOR DETERMINING THE REFRACTIVE INDEX AND/OR WALL THICKNESS OF AN OBJECT
DISPOSITIF ET PROCÉDÉ DE DÉTERMINATION DE L'INDICE DE RÉFRACTION ET/OU DE L'ÉPAISSEUR DE PAROI D'UN OBJET

(43) Veröffentlichungstag der Anmeldung: 12.03.2025
(73) Patentinhaber: SIKORA AG, 28307 Bremen (DE)
(72) Erfinder: Schuh, Kolja Tobias, 28307 Bremen (DE)
(74) Vertreter: Hauck Patent- und Rechtsanwälte PartmbB

(56) Entgegenhaltungen:
- CN-A- 108 020 165
- DE-B3- 102022 105 479
- US-A- 4 553 841

## Beschreibung

Die Erfindung betrifft eine Vorrichtung zum Bestimmen des Brechungsindex und/oder der Wanddicke eines Gegenstands, vorzugsweise eines plattenförmigen Gegenstands, umfassend einen ersten Sender für Terahertzstrahlung und einen ersten Empfänger für Terahertzstrahlung, wobei der erste Sender dazu ausgebildet ist, Terahertzstrahlung entlang einer ersten Hauptstrahlrichtung auf den Gegenstand auszusenden, und wobei der erste Empfänger ausgebildet ist, die von dem ersten Sender ausgesendete Terahertzstrahlung nach Durchstrahlen des Gegenstands zu empfangen.

Die Erfindung betrifft außerdem ein Verfahren zum Bestimmen des Brechungsindex und/oder der Wanddicke eines Gegenstands, vorzugsweise eines plattenförmigen Gegenstands, bei dem mit einem ersten Sender Terahertzstrahlung entlang einer ersten Hauptstrahlrichtung auf den Gegenstand ausgesendet wird, und mit einem ersten Empfänger die von dem ersten Sender ausgesendete Terahertzstrahlung nach Durchstrahlen des Gegenstands empfangen wird.

Mit Terahertzstrahlung kann zum Beispiel anhand von Laufzeitmessungen die optische Wanddicke von für die Terahertzstrahlung zumindest teilweise transparenten Gegenständen bestimmt werden. Dabei wird die Terahertzstrahlung an Grenzflächen des Gegenstands reflektiert und die reflektierte Strahlung von einem entsprechenden Empfänger gemessen. Um aus der optischen Wanddicke die geometrische Wanddicke zu bestimmen, muss der Brechungsindex des Materials des Gegenstands bekannt sein. Häufig ist der Brechungsindex nicht oder nicht genau genug bekannt. Dies gilt beispielsweise bei in einer Extrusionsvorrichtung extrudierten Gegenständen. So werden dem zu extrudierenden Material vor der Extrusion verschiedene Additive zugemischt, um Eigenschaften des hergestellten Gegenstands zu optimieren. Die genaue Zusammensetzung des zu extrudierenden Materials mit den Additiven ist häufig nicht hinreichend genau bekannt. Gleichzeitig verändert sich mit wechselnder Zusammensetzung der Brechungsindex.

WO 2016/139155 A1 beschreibt eine Vorrichtung und ein Verfahren, mit denen mittels Terahertzstrahlung der Brechungsindex eines hinsichtlich seiner Wanddicke zu vermessenden Gegenstands bestimmt werden kann. Auf diese Weise ist eine genaue Bestimmung der geometrischen Wanddicke des Gegenstands möglich, auch wenn vorab keine genaue Kenntnis des Brechungsindex vorliegt.

Die im Stand der Technik beschriebene direkte gleichzeitige Bestimmung des Brechungsindex und der Wanddicke setzt besonders für kleine Wanddicken Sender und Empfänger für Terahertzstrahlung mit relativ großer Bandbreite voraus. Beispielsweise bei einer Wanddicke von 1 mm und einem Brechungsindex von 1,5 ist eine Bandbreite der Terahertzstrahlung von etwa 100 GHz notwendig. Breitbandige Terahertzsensoren sind komplex und entsprechend kostenaufwendig.

DE 10 2022 105 479 B3 beschreibt ein Verfahren zum Bestimmen von Dimensionsdaten eines plattenförmigen oder strangförmigen Objekts, bei dem eine kombinierte Vermessung des Objekts mit einem ersten Messsystem mit einem ersten Sender und ersten Empfänger und einem zweiten Messsystemmit mit einem zweiten Sender und zweiten Empfänger durchgeführt wird. Der erste Sender sendet Terahertzstrahlung hoher Bandbreite aus und der zweite Sender sendet Terahertzstrahlung geringer Bandbreite zu mehreren Zeitpunkten und/oder auf mehrere Orte auf der Oberfläche des Objekts aus. Während mit dem ersten Messsystem Absolutwerte von Dimensionsdaten des Objekts, gegebenenfalls einschließlich des Brechungsindex, ermittelt werden, wird mit dem zweiten Messsystem insbesondere nur eine Dimensionsänderung des Objekts, zum Beispiel eine Dickenänderung gemessen. In Kombination der beiden Messsysteme lassen sich zum Beispiel Dickenänderungen jederzeit zuverlässig ermitteln. Dabei werden mit dem zweiten Messsystem insbesondere nicht die direkten Strahlungsreflektionen an Grenzflächen des Objekts ausgewertet, sondern die durch das Objekt beim Durchstrahlen verursachte Verzögerung der Terahertzstrahlung.

US 4 553 841 A beschreibt ein Messsystem zum Messen des Brechungsindex und der Dicke eines Preform für eine Glasfaser mittels eines Helium-Neon-Lasers. Dabei wird monochromatische Strahlung zweier eng benachbarter Frequenzen durch den Zeeman-Effekt erzeugt und durch das Objekt hindurchgestrahlt. Ein weiterer monochromatischer Strahl einer der Laserfrequenzen wird an dem transparenten Objekt vorbeigeführt. Durch Phasenvergleiche bei unterschiedlichen Einfallswinkeln werden rechnerisch der Brechungsindex und die Dicke bestimmt.

CN 108020165 A beschreibt ein weiteres Verfahren zum Messen der Dicke nichtmetallischer Materialien unter Verwendung von Terahertzstrahlung.

Ausgehend von dem erläuterten Stand der Technik liegt der Erfindung daher die Aufgabe zugrunde, eine Vorrichtung und ein Verfahren der eingangs genannten Art bereitzustellen, mit denen der Brechungsindex und/oder die geometrische Wanddicke eines Gegenstands in einfacher und kostengünstiger Weise bestimmt werden können.

Die Erfindung löst die Aufgabe durch die unabhängigen Ansprüche 1 und 9. Vorteilhafte Ausgestaltungen finden sich in den abhängigen Ansprüchen, der Beschreibung und den Figuren.

Für eine Vorrichtung der eingangs genannten Art löst die Erfindung die Aufgabe unter anderem dadurch,
- dass ein zweiter Sender für Terahertzstrahlung und ein zweiter Empfänger für Terahertzstrahlung vorgesehen sind, wobei der zweite Sender dazu ausgebildet ist, Terahertzstrahlung entlang einer zweiten Hauptstrahlrichtung auf den Gegenstand auszusenden, wobei die erste und zweite Hauptstrahlrichtung unter unterschiedlichen Winkeln in Bezug auf eine den Gegenstand bei einer Messung aufnehmende Messebene verlaufen, und wobei der zweite Empfänger ausgebildet ist, die von dem zweiten Sender ausgesendete Terahertzstrahlung nach Durchstrahlen des Gegenstands zu empfangen,
- dass eine Auswerteeinrichtung vorgesehen ist, die dazu ausgebildet ist, aus den von dem ersten Empfänger nach Durchstrahlen des Gegenstands empfangenen Messsignalen einen ersten gemessenen Laufweg der Terahertzstrahlung zwischen dem ersten Sender und dem ersten Empfänger zu bestimmen und mit einem ersten Referenzlaufweg der Terahertzstrahlung zwischen dem ersten Sender und dem ersten Empfänger ohne Durchstrahlen des Gegenstands zu vergleichen, und aus den von dem zweiten Empfänger nach Durchstrahlen des Gegenstands empfangenen Messsignalen einen zweiten gemessenen Laufweg der Terahertzstrahlung zwischen dem zweiten Sender und dem zweiten Empfänger zu bestimmen und mit einem zweiten Referenzlaufweg der Terahertzstrahlung zwischen dem zweiten Sender und dem zweiten Empfänger ohne Durchstrahlen des Gegenstands zu vergleichen, und
- dass die Auswerteeinrichtung weiter dazu ausgebildet ist, auf Grundlage der Vergleiche den Brechungsindex und/oder die Wanddicke des Gegenstands zu bestimmen.

Für das Verfahren der eingangs genannten Art löst die Erfindung die Aufgabe unter anderem durch die Schritte
- mit einem zweiten Sender wird Terahertzstrahlung entlang einer zweiten Hauptstrahlrichtung auf den Gegenstand ausgesendet, wobei die erste und zweite Hauptstrahlrichtung unter unterschiedlichen Winkeln in Bezug auf eine dem ersten Sender und eine dem zweiten Sender gegenüberliegende Oberfläche des Gegenstands verlaufen, und mit einem zweiten Empfänger wird die von dem zweiten Sender ausgesendete Terahertzstrahlung nach Durchstrahlen des Gegenstands empfangen,
- aus den von dem ersten Empfänger nach Durchstrahlen des Gegenstands empfangenen Messsignalen wird ein erster gemessener Laufweg der Terahertzstrahlung zwischen dem ersten Sender und dem ersten Empfänger bestimmt und mit einem ersten Referenzlaufweg der Terahertzstrahlung zwischen dem ersten Sender und dem ersten Empfänger ohne Durchstrahlen des Gegenstands verglichen, aus den von dem zweiten Empfänger nach Durchstrahlen des Gegenstands empfangenen Messsignalen wird ein zweiter gemessener Laufweg zwischen dem zweiten Sender und dem zweiten Empfänger bestimmt und mit einem zweiten Referenzlaufweg zwischen dem zweiten Sender und dem zweiten Empfänger ohne Durchstrahlen des Gegenstands verglichen, und
- auf Grundlage der Vergleiche wird der Brechungsindex und/oder die Wanddicke des Gegenstands bestimmt.

Bei dem erfindungsgemäß zu vermessenden Gegenstand kann es sich beispielsweise um einen Kunststoffgegenstand oder einen Glasgegenstand handeln. Der Gegenstand kann beispielweise eine plattenförmige Ausgestaltung besitzen, beispielsweise mit zwei zueinander parallelen Oberflächen. Er ist für die Terahertzstrahlung des ersten bzw. zweiten Senders zumindest teiltransparent, so dass er von der Terahertzstrahlung durchstrahlt werden kann. Der Gegenstand kann beispielsweise in einer Extrusionsvorrichtung hergestellt worden sein. Der Gegenstand kann während der Messung mittels einer Fördereinrichtung, die Teil der erfindungsgemäßen Vorrichtung sein kann, durch einen Messbereich der Vorrichtung gefördert werden. Die von dem ersten Sender und dem zweiten Sender ausgesendete Terahertzstrahlung besitzt eine Frequenz in einem Bereich von 1 GHz bis 10 THz. Dabei handelt es sich um die Grundfrequenz, um die herum die Terahertzstrahlung eine gewisse Bandbreite aufweist. Wie nachfolgend näher erläutert, kann diese Bandbreite erfindungsgemäß im Vergleich zu bekannten Messvorrichtungen klein sein.

Erfindungsgemäß wird von einem ersten Sender und einem zweiten Sender jeweils Terahertzstrahlung auf den Gegenstand, insbesondere annähernd auf denselben Ort auf der Oberfläche des Gegenstands, gerichtet. Die Winkel der ersten und zweiten Hauptstrahlrichtungen der Terahertzstrahlung des ersten Senders und des zweiten Senders relativ zu einer den Gegenstand während einer Messung aufnehmenden Messebene bzw. relativ zu der dem ersten bzw. zweiten Sender zugewandten Oberfläche des Gegenstands unterscheiden sich. Der Gegenstand wird während einer Messung so in der Vorrichtung angeordnet, dass seine dem ersten bzw. zweiten Sender zugewandte Oberfläche der Messebene entspricht. Sofern die erfindungsgemäße Vorrichtung den Gegenstand umfasst, wird die Messebene also durch die dem ersten bzw. zweiten Sender zugewandte Oberfläche gebildet. Die Messebene kann entsprechend eine zweidimensionale Ebene sein, wenn der Gegenstand zum Beispiel plattenförmig ist mit einer dem ersten bzw. zweiten Sender zugewandten ebenen Oberfläche, oder beispielsweise eine gekrümmte Ebene, wenn der Gegenstand zum Beispiel eine zylindrische Außenfläche aufweist. In diesem Fall entspricht die Messebene der zylindrischen Außenfläche des Gegenstands.. Die Winkel können insbesondere relativ zu einer Normalen auf der Messebene bzw. auf der Oberfläche des Gegenstands gemessen werden. Die Differenz der Winkel kann dann zum Beispiel in einem Bereich zwischen 10° und 80°, vorzugsweise zwischen 30° und 60° liegen. Die von dem ersten Sender und dem zweiten Sender ausgesendete Terahertzstrahlung durchstrahlt jeweils den Gegenstand und wird nach dem Durchstrahlen von dem ersten bzw. zweiten Empfänger als Messsignale empfangen. Wie nachfolgend näher erläutert, können der erste Sender und der erste Empfänger auf gegenüberliegenden Seiten des Gegenstands angeordnet sein und/oder der zweite Sender und der zweite Empfänger auf gegenüberliegenden Seiten des Gegenstands angeordnet sein. Es ist jedoch auch möglich, dass der erste Sender und der erste Empfänger und/oder der zweite Sender und der zweite Empfänger auf derselben Seite des Gegenstands angeordnet sind. In diesem Fall befindet sich auf der gegenüberliegenden Seite ein erster bzw. zweiter Reflektor, der die ausgesendete Terahertzstrahlung nach Durchstrahlen des Gegenstands zurück zu dem jeweiligen Empfänger reflektiert. Die als Messignale empfangene Terahertzstrahlung hat den Gegenstand dann also zweimal durchstrahlt, was rechnerisch berücksichtigt werden kann.

Erfindungsgemäß wird insbesondere mittels der Auswerteeinrichtung der erfindungsgemäßen Vorrichtung aus den von dem ersten Empfänger empfangenen Messsignalen, nachdem die von dem ersten Sender ausgesendete Terahertzstrahlung den Gegenstand (mindestens einmal) durchstrahlt hat, ein erster gemessener Laufweg zwischen dem ersten Sender und dem ersten Empfänger bestimmt. Entsprechend wird aus den von dem zweiten Empfänger empfangenen Messsignalen der von dem zweiten Sender ausgesendeten Terahertzstrahlung nach (mindestens einmaligem) Durchstrahlen des Gegenstands ein zweiter gemessener Laufweg zwischen dem zweiten Sender und dem zweiten Empfänger bestimmt. Der erste bzw. zweite Laufwege kann zum Beispiel bestimmt werden, indem eine Laufzeitmessung der Terahertzstrahlung zwischen dem Aussenden durch den ersten bzw. zweiten Sender und dem Empfang durch den ersten bzw. zweiten Empfänger erfolgt. Der erste gemessene Laufweg wird mit einem ersten Referenzlaufweg zwischen dem ersten Sender und dem ersten Empfänger verglichen, wie er sich ohne Durchstrahlen des Gegenstands, also ohne im Strahlengang der Terahertzstrahlung angeordnetem Gegenstand, ergibt. Der gemessene zweite Laufweg wird entsprechend mit einem zweiten Referenzlaufweg zwischen dem zweiten Sender und dem zweiten Empfänger verglichen, wie er sich wiederum ohne Durchstrahlen des Gegenstands, also ohne im Strahlengang der Terahertzstrahlung angeordnetem Gegenstand, ergibt. Die Referenzlaufwege entsprechen also den Laufwegen zwischen dem ersten Sender und dem ersten Empfänger bzw. zwischen dem zweiten Sender und dem zweiten Empfänger, wenn im Messbereich kein Gegenstand angeordnet ist. Aus diesen Vergleichen zwischen den ersten bzw. zweiten gemessenen Laufwegen und ersten bzw. zweiten Referenzlaufwegen wird erfindungsgemäß der Brechungsindex und/oder die Wanddicke des Gegenstands bestimmt, insbesondere durch die Auswerteeinrichtung der erfindungsgemäßen Vorrichtung. Bei der bestimmten Wanddicke handelt es sich insbesondere um die geometrische Wanddicke.

Die ersten und zweiten gemessenen Laufwege sind größer als die ersten und zweiten Referenzlaufwege, da die Ausbreitungsgeschwindigkeit der Terahertzstrahlung in dem gegenüber dem Umgebungsmedium, beispielsweise Luft, dichteren Medium des Gegenstands verlangsamt ist. Damit ergeben sich bei in dem Messbereich angeordnetem Gegenstand längere Laufzeiten der diesen durchstrahlenden Terahertzstrahlung als ohne Durchstrahlen des Gegenstands. Der Laufweg zwischen dem ersten Sender und dem ersten Empfänger bzw. zwischen dem zweiten Sender und dem zweiten Empfänger erscheint also bei in dem Messbereich angeordnetem Gegenstand länger als ohne in dem Messbereich angeordneten Gegenstand.

Erfindungsgemäß wird ausgenutzt, dass der Unterschied zwischen den ersten und zweiten gemessenen Laufwegen und den ersten und zweiten Referenzlaufwegen unabhängig vom Winkel der Hauptstrahlrichtung der auf den Gegenstand eingestrahlten Terahertzstrahlung proportional zur Wanddicke des Gegenstands ist, wohingegen die Abhängigkeit vom Brechungsindex des Materials des Gegenstands von dem Winkel abhängt, mit dem die Terahertzstrahlung auf den Gegenstand einfällt. Der Grund ist, dass der Brechungsindex des Gegenstands nicht nur die Ausbreitungsgeschwindigkeit der Terahertzstrahlung in dem Gegenstand bestimmt, sondern zusätzlich die Ausbreitungsrichtung der Terahertzstrahlung in dem Gegenstand eine Funktion des Brechungsindex und des Winkels der einfallenden Terahertzstrahlung ist. Damit kann aus den erfindungsgemäß vorgenommenen Vergleichen ein Gleichungssystem aus zwei Gleichungen und zwei Unbekannten, nämlich dem Brechungsindex und der geometrischen Wanddicke, aufgestellt werden, das eindeutig lösbar ist, sofern sich die Beträge der Winkel der ersten und zweiten Hauptstrahlrichtung in Bezug auf die Messebene bzw. die dem ersten bzw. zweiten Sender jeweils zugewandte Oberfläche des Gegenstands unterscheiden. Auf dieser Grundlage ist es erfindungsgemäß möglich, lediglich aus Laufwegs- bzw. Abstandsmessungen zwischen Sendern und Empfängern, und insbesondere ohne eine direkte Messung der Wanddicke anhand von an den Grenzflächen des Gegenstands reflektierter Terahertzstrahlung, den Brechungsindex und die geometrische Wanddicke des Gegenstands zu bestimmen. Die erfindungsgemäß vorgenommenen Laufwegs- bzw. Abstandsmessungen sind mit schmalbandigen Terahertzsendern und -empfängern möglich, mit denen eine direkte gleichzeitige Wanddicken- und Brechungsindexbestimmung nicht möglich wäre. So muss die erfindungsgemäß verwendete Bandbreite der Terahertzstrahlung lediglich für Laufwegsmessungen ausreichen, die wie erläutert durch Laufzeitmessungen realisiert sein können. Damit können einfachere und kostengünstigere Sender und Empfänger eingesetzt werden. Auch die Auswertung der Messsignale ist vergleichsweise einfach.

Soweit die von dem ersten Sender bzw. dem zweiten Sender ausgesendete Terahertzstrahlung einen Öffnungswinkel aufweist, entspricht die Hauptstrahlrichtung dem Mitten- oder Zentralstrahl bzw. der Mittenrichtung des ausgesendeten Strahlungswinkels bzw. Strahlungskegels. Für eine besonders einfache Auswertung kann zum Beispiel der erste Sender Terahertzstrahlung lotrecht auf die Messebene bzw. die Oberfläche des Gegenstands aussenden.

Die Auswerteeinrichtung der erfindungsgemäßen Vorrichtung kann getrennt von dem ersten und/oder zweiten Sender und/oder Empfänger ausgebildet sein. Sie kann auch teilweise oder vollständig in den ersten und/oder zweiten Sender und/oder Empfänger integriert sein. Die Auswerteeinrichtung kann entsprechend einteilig oder mehrteilig aufgebaut sein. Die erfindungsgemäße Vorrichtung kann auch den zu vermessenden Gegenstand umfassen.

Nach einer Ausgestaltung kann die Auswerteinrichtung weiter dazu ausgebildet sein, den ersten Referenzlaufweg aus von dem ersten Empfänger empfangenen Messsignalen ohne im Strahlengang der von dem ersten Sender ausgesendeten Terahertzstrahlung angeordneten Gegenstand zu bestimmen und/oder den zweiten Referenzlaufweg aus von dem zweiten Empfänger empfangenen Messsignalen ohne im Strahlengang der von dem zweiten Sender ausgesendeten Terahertzstrahlung angeordneten Gegenstand zu bestimmen. In diesem Fall erfolgt also eine messtechnische Ermittlung der Referenzlaufwege, indem eine Terahertzmessung ohne den Gegenstand im Messbereich der ersten bzw. zweiten Sender und Empfänger erfolgt. Diese Messung der Referenzlaufwege kann entsprechend vor oder nach dem Vermessen des Gegenstands erfolgen. Die Referenzlaufwege liegen damit besonders präzise vor. Die Messung der Referenzlaufwege kann wiederum über Laufzeitmessungen erfolgen.

Nach einer weiteren Ausgestaltung ist es möglich, dass der erste Sender und der erste Empfänger auf derselben Seite eines den Gegenstand während einer Messung aufnehmenden Messbereichs angeordnet sind, wobei auf einer gegenüberliegenden Seite des Messbereichs ein erster Reflektor angeordnet ist, der dazu ausgebildet ist, von dem ersten Sender ausgesendete Terahertzstrahlung nach Durchstrahlen des Gegenstands zu dem ersten Empfänger zurück zu reflektieren, und/oder dass der zweite Sender und der zweite Empfänger auf derselben Seite eines den Gegenstand während einer Messung aufnehmenden Messbereichs angeordnet sind, wobei auf einer gegenüberliegenden Seite des Messbereichs ein zweiter Reflektor angeordnet ist, der dazu ausgebildet ist, von dem zweiten Sender ausgesendete Terahertzstrahlung nach Durchstrahlen des Gegenstands zu dem zweiten Empfänger zurück zu reflektieren. Bei dieser Ausgestaltung erfolgt also eine Reflektion der von dem ersten bzw. zweiten Sender ausgesendeten Terahertzstrahlung nach dem ersten Durchstrahlen des Gegenstands zurück zu dem auf derselben Seite wie der erste bzw. zweite Sender angeordneten ersten bzw. zweiten Empfänger. Es erfolgt somit ein zweimaliges Durchstrahlen des Gegenstands durch die Terahertzstrahlung bevor diese durch den jeweiligen Empfänger empfangen wird. Wie erläutert, kann dies rechnerisch bei der Bestimmung des jeweiligen Laufwegs berücksichtigt werden. Wie oben erläutert, ist es alternativ ebenso möglich, dass erster bzw. zweiter Sender und erster bzw. zweiter Empfänger auf gegenüberliegenden Seiten des Gegenstands angeordnet sind, so dass die Terahertzstrahlung nach einmaligem Durchstrahlen des Gegenstands von dem ersten bzw. zweiten Empfänger empfangen wird.

Der erste Sender und der erste Empfänger können sich im Wesentlichen am selben Ort befinden. Entsprechend können sich der zweite Sender und der zweite Empfänger im Wesentlichen am selben Ort befinden. Nach einer Ausgestaltung können der erste Sender und der erste Empfänger durch einen ersten Transceiver gebildet sein und/oder der zweite Sender und der zweite Empfänger durch einen zweiten Transceiver gebildet sein.

Nach einer weiteren Ausgestaltung kann die Auswerteeinrichtung weiter dazu ausgebildet sein, eine erste Laufwegsdifferenz zwischen dem ersten gemessenen Laufweg und dem ersten Referenzlaufweg und eine zweite Laufwegsdifferenz zwischen dem zweiten gemessenen Laufweg und dem zweiten Referenzlaufweg zu bestimmen. Die Auswerteeinrichtung kann weiter dazu ausgebildet sein, bei der Bestimmung des Brechungsindex und/oder der Wanddicke die unterschiedlichen Winkel der ersten Hauptstrahlrichtung und der zweiten Hauptstrahlrichtung zu berücksichtigen. Weiter kann die Auswerteeinrichtung dazu ausgebildet sein, bei der Bestimmung des Brechungsindex und/oder der Wanddicke den Winkel der ersten Hauptstrahlrichtung zu der Messebene bzw. der dem ersten Sender gegenüberliegenden Oberfläche des Gegenstands und den Winkel der zweiten Hauptstrahlrichtung zu der Messebene bzw. der dem zweiten Sender gegenüberliegenden Oberfläche des Gegenstands zu berücksichtigen.

Sofern erste bzw. zweite Reflektoren vorgesehen sind zum Reflektieren der von dem ersten bzw. zweiten Sender ausgesendeten Terahertzstrahlung nach Durchstrahlen des Gegenstands, können diese Reflektoren eben ausgebildet sein.

Für die erste Laufwegsdifferenz Δ_{α} zwischen dem ersten gemessenen Laufweg und dem ersten Referenzlaufweg ergibt sich folgende Gleichung: ${Δ}_{α} = d ⋅ \left[\sqrt{{n}^{2} + {sin}^{2} \left(α\right)}-cos\left(α\right)\right]$

Für die zweite Laufwegsdifferenz Δ_{β} zwischen dem zweiten gemessenen Laufweg und deim zweiten Referenzlaufweg ergibt sich entsprechend folgende Gleichung: ${Δ}_{β} = d ⋅ \left[\sqrt{{n}^{2} + {sin}^{2} \left(β\right)}-cos\left(β\right)\right]$

Darin sind *n* der Brechungsindex des Materials des Gegenstands, d die geometrische Wanddicke des Gegenstands, *α* der Winkel der ersten Hauptstrahlrichtung relativ zur Normalen auf der dem ersten Sender zugewandten Oberfläche des Gegenstands und β der Winkel der zweiten Hauptstrahlrichtung relativ zur Normalen auf der dem zweiten Sender zugewandten Oberfläche des Gegenstands. Dieses Gleichungssystem aus zwei Gleichungen und zwei Unbekannten ist entsprechend für den Brechungsindex n und die geometrische Wanddicke d und bei bekannten Winkeln α und β eindeutig lösbar.

Wie bereits erläutert, erlaubt die Erfindung die Verwendung einfacher und kostengünstiger schmalbandiger Terahertzsender und -empfänger bei gleichzeitig präziser Bestimmung des Brechungsindex und der geometrischen Wanddicke des Gegenstands. So senden der erste Sender und der zweite Sender Terahertzstrahlung mit einer Bandbreite von weniger als 10 GHz aus. Vorzugsweise senden der erste Sender und der zweite Sender Terahertzstrahlung mit einer Bandbreite von weniger als 5 GHz, weiter vorzugsweise weniger als 1 GHz, aus. Der erste bzw. zweite Empfänger kann ebenfalls eine entsprechend geringe Bandbreite besitzen. So kann erfindungsgemäß beispielsweise das einfach realisierbare ISM-Band zwischen 122 und 123 GHz verwendet werden.

Das erfindungsgemäße Verfahren kann mit der erfindungsgemäßen Vorrichtung durchgeführt werden. Entsprechend kann die erfindungsgemäße Vorrichtung zur Durchführung des erfindungsgemäßen Verfahrens ausgebildet sein.

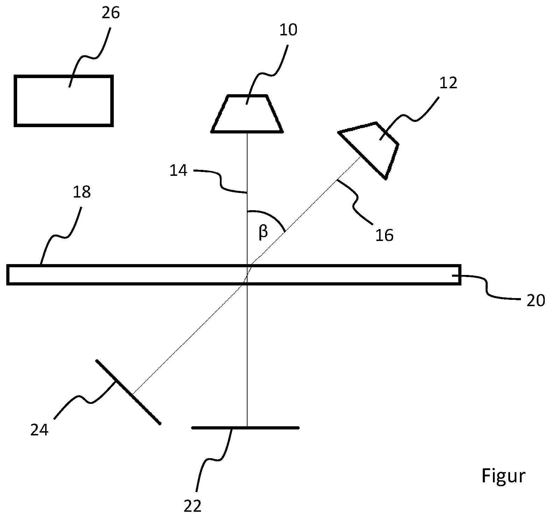

Ein Ausführungsbeispiel der Erfindung wird nachfolgend anhand einer Zeichnung näher erläutert. Die einzige Figur zeigt schematisch eine erfindungsgemäße Vorrichtung.

Die erfindungsgemäße Vorrichtung umfasst einen ersten Transceiver 10 mit einem ersten Sender und einem ersten Empfänger für Terahertzstrahlung sowie einen zweiten Transceiver 12 mit einem zweiten Sender und einem zweiten Empfänger für Terahertzstrahlung. Von dem ersten Sender des ersten Transceivers 10 wird Terahertzstrahlung entlang einer ersten Hauptstrahlrichtung 14 ausgesendet. Von dem zweiten Sender des zweiten Transceivers 12 wird Terahertzstrahlung entlang einer zweiten Hauptstrahlrichtung 16 ausgesendet. Die zweite Hauptstrahlrichtung 16 verläuft unter einem Winkel β zu der ersten Hauptstrahlrichtung 14. Die von dem ersten Sender ausgesendete Terahertzstrahlung trifft im vorliegenden Beispiel in Normalenrichtung auf eine dem ersten Transceiver 10 zugewandte Oberfläche 18 eines im dargestellten Beispiel plattenförmigen, zu vermessenden Gegenstands 20. Diese Oberfläche 18 bildet im dargestellten Beispiel gleichzeitig eine den Gegenstand während der Messung aufnehmende Messebene 18. Der Gegenstand 20 ist für die von dem ersten und zweiten Sender ausgesendete Terahertzstrahlung zumindest teiltransparent und kann beispielsweise aus einem Kunststoff oder einem Glas bestehen. Die von dem ersten Sender des ersten Transceivers 10 ausgesendete Terahertzstrahlung trifft nach dem Durchstrahlen des Gegenstands 20 auf einen ebenen ersten Reflektor 22 und wird von diesem zurück zu dem Transceiver 10 und damit dem ersten Empfänger reflektiert, der die Terahertzstrahlung nach zweimaligem Durchstrahlen des Gegenstands 20 als Messsignale empfängt. Die von dem zweiten Sender des zweiten Transceivers 12 ausgesendete Terahertzstrahlung trifft annähernd am gleichen Ort wie die von dem ersten Sender ausgesendete Terahertzstrahlung auf die auch dem zweiten Transceiver 12 zugewandte Oberfläche 18 des Gegenstands 20, vorliegend unter dem Winkel β relativ zur Normalen auf der Oberfläche 18. Die von dem zweiten Sender ausgesendete Terahertzstrahlung durchstrahlt ebenfalls den Gegenstand 20 und erfährt dabei entsprechend dem Brechungsindex des Materials des Gegenstands 20 eine Brechung beim Ein- und Austritt aus dem Gegenstand 20. Nach Durchstrahlen des Gegenstands 20 gelangt auch die Terahertzstrahlung des zweiten Senders zu einem ebenen Reflektor 24 und wird von diesem wiederum zurück zu dem zweiten Transceiver 12 und damit dem zweiten Empfänger reflektiert, der diese als Messsignale empfängt.

Die von dem ersten und zweiten Empfänger empfangenen Messsignale liegen an einer Auswerteeinrichtung 26 an, die aus den empfangenen Messsignalen einen ersten gemessenen Laufweg zwischen dem ersten Sender und dem ersten Empfänger bestimmt. Der erste Laufweg wird dabei aus der Laufzeit der Terahertzstrahlung vom Aussenden durch den ersten Sender bis zum Empfang durch den ersten Empfänger ermittelt. Es handelt sich also um den doppelten Laufweg zwischen dem ersten Transceiver 10 und dem ersten Reflektor 22. In entsprechender Weise bestimmt die Auswerteeinrichtung 26 aus den von dem zweiten Empfänger empfangenen Messsignalen auf Grundlage einer Laufzeitmessung den Laufweg zwischen dem zweiten Sender und dem zweiten Empfänger, wobei dieser wiederum dem doppelten Laufweg zwischen dem zweiten Transceiver 12 und dem zweiten Reflektor 24 entspricht. Aufgrund der entsprechend dem Brechungsindex des Materials des Gegenstands 20 im Vergleich zum Umgebungsmedium größeren Dichte sind die gemessenen ersten und zweiten Laufzeiten der von dem ersten Sender ausgesendeten und vom ersten Sender empfangenen Terahertzstrahlung bzw. der von dem zweiten Sender ausgesendeten und vom zweiten Empfänger empfangenen Terahertzstrahlung bei im Messbereich angeordnetem Gegenstand 20 länger als ohne den Gegenstand 20 im Messbereich zwischen den Transceivern 10, 12 und den Reflektoren 22, 24. Anhand einer zuvor durchgeführten Referenzmessung kann ein erster Referenzlaufweg zwischen dem ersten Sender und dem ersten Empfänger, vorliegend also der doppelte Laufweg zwischen dem ersten Transceiver 10 und dem ersten Reflektor 22 gemessen werden, insbesondere indem die Laufzeit der von dem ersten Sender ausgesendeten Terahertzstrahlung bis zum Empfang durch den ersten Empfänger ohne im Messbereich angeordneten Gegenstand 20 gemessen wird. In entsprechender Weise kann ein zweiter Referenzlaufweg zwischen dem zweiten Sender und dem zweiten Empfänger, vorliegend also der doppelte Laufweg zwischen dem zweiten Transceiver 12 und dem zweiten Reflektor 24 gemessen werden, wiederum ohne im Messbereich angeordneten Gegenstand 20.

Die Auswerteeinrichtung 26 bildet auf dieser Grundlage eine erste Laufwegsdifferenz Δ_{α} zwischen dem ersten gemessenen Laufweg und dem ersten Referenzlaufweg und eine zweite Laufwegsdifferenz Δ_{β} zwischen dem zweiten gemessenen Laufweg und dem zweiten Referenzlaufweg. Wie oben erläutert, gelten für die Laufwegsdifferenzen Δ_{α} und Δ_{β} die folgenden Gleichungen: ${Δ}_{α} = d ⋅ \left[\sqrt{{n}^{2} + {sin}^{2} \left(α\right)}-cos\left(α\right)\right]$ ${Δ}_{β} = d ⋅ \left[\sqrt{{n}^{2} + {sin}^{2} \left(β\right)}-cos\left(β\right)\right]$

Der Winkel α der ersten Hauptstrahlrichtung 14 zur Flächennormalen auf der Oberfläche 18 des Gegenstands 20 ist bekannt und beträgt vorliegend 0°. Er ist in der Figur entsprechend nicht eingezeichnet. Der in der Figur eingezeichnete Winkel β zwischen der ersten und zweiten Hauptstrahlrichtung 14, 16 ist entsprechend gleich dem Winkel zwischen der zweiten Hauptstrahlrichtung 16 und der Flächennormalen auf der Oberfläche 18 des Gegenstands 20. Dieser ist ebenfalls bekannt und beträgt vorliegend beispielsweise 45°. Damit können mit dem obigen Gleichungssystem der Brechungsindex n und die geometrische Wanddicke d des Gegenstands 20 eindeutig bestimmt werden.

Da vorliegend lediglich Laufwegs- bzw. Laufzeitmessungen vorgenommen werden müssen, können der erste Transceiver 10 mit dem ersten Sender und dem ersten Empfänger und der zweite Transceiver 12 mit dem zweiten Sender und zweiten Empfänger schmalbandig ausgestaltet sein. Sie weisen eine Bandbreite von jeweils weniger als 10 GHz, vorzugsweise weniger als 5 GHz, weiter vorzugsweise weniger als 1 GHz, auf.

### Bezugszeichenliste

- 10: Erster Transceiver
- 12: Zweiter Transceiver
- 14: Erste Hauptstrahlrichtung
- 16: Zweite Hauptstrahlrichtung
- 18: Oberfläche / Messebene
- 20: Gegenstand
- 22: Erster Reflektor
- 24: Zweiter Reflektor
- 26: Auswerteeinrichtung

## Patentansprüche

1. Vorrichtung zum Bestimmen des Brechungsindex und/oder der Wanddicke eines Gegenstands (20), vorzugsweise eines plattenförmigen Gegenstands (20), umfassend einen ersten Sender (10) für Terahertzstrahlung und einen ersten Empfänger (10) für Terahertzstrahlung, wobei der erste Sender (10) dazu ausgebildet ist, Terahertzstrahlung mit einer Frequenz in einem Bereich von 1 GHz bis 10 THz entlang einer ersten Hauptstrahlrichtung (14) auf den Gegenstand (20) auszusenden, und wobei der erste Empfänger (10) ausgebildet ist, die von dem ersten Sender (10) ausgesendete Terahertzstrahlung nach Durchstrahlen des Gegenstands (20) zu empfangen, wobei
• ein zweiter Sender (12) für Terahertzstrahlung und ein zweiter Empfänger (12) für Terahertzstrahlung vorgesehen sind, wobei der zweite Sender (12) dazu ausgebildet ist, Terahertzstrahlung mit einer Frequenz in einem Bereich von 1 GHz bis 10 THz entlang einer zweiten Hauptstrahlrichtung (16) auf den Gegenstand (20) auszusenden, wobei die erste und zweite Hauptstrahlrichtung (14, 16) unter unterschiedlichen Winkeln in Bezug auf eine den Gegenstand bei einer Messung aufnehmende Messebene (18) verlaufen, und wobei der zweite Empfänger (12) ausgebildet ist, die von dem zweiten Sender (12) ausgesendete Terahertzstrahlung nach Durchstrahlen des Gegenstands (20) zu empfangen, wobei der erste Sender (10) und der zweite Sender (12) Terahertzstrahlung mit einer Bandbreite von weniger als 10 GHz aussenden,
• eine Auswerteeinrichtung (26) vorgesehen ist, die dazu ausgebildet ist, aus den von dem ersten Empfänger (10) nach Durchstrahlen des Gegenstands (20) empfangenen Messsignalen einen ersten gemessenen Laufweg der Terahertzstrahlung zwischen dem ersten Sender (10) und dem ersten Empfänger (10) zu bestimmen und mit einem ersten Referenzlaufweg der Terahertzstrahlung zwischen dem ersten Sender (10) und dem ersten Empfänger (10) ohne Durchstrahlen des Gegenstands (20) zu vergleichen, und aus den von dem zweiten Empfänger (12) nach Durchstrahlen des Gegenstands (20) empfangenen Messsignalen einen zweiten gemessenen Laufweg der Terahertzstrahlung zwischen dem zweiten Sender (12) und dem zweiten Empfänger (12) zu bestimmen und mit einem zweiten Referenzlaufweg der Terahertzstrahlung zwischen dem zweiten Sender (12) und dem zweiten Empfänger (12) ohne Durchstrahlen des Gegenstands (20) zu vergleichen, und
• die Auswerteeinrichtung (26) weiter dazu ausgebildet ist, auf Grundlage der Vergleiche den Brechungsindex und/oder die Wanddicke des Gegenstands (20) zu bestimmen.

2. Vorrichtung nach Anspruch 1, **dadurch gekennzeichnet, dass** die Auswerteeinrichtung (26) weiter dazu ausgebildet ist, den ersten Referenzlaufweg aus von dem ersten Empfänger (10) empfangenen Messsignalen ohne im Strahlengang der von dem ersten Sender (10) ausgesendeten Terahertzstrahlung angeordneten Gegenstand (20) zu bestimmen und/oder den zweiten Referenzlaufweg aus von dem zweiten Empfänger (12) empfangenen Messsignalen ohne im Strahlengang der von dem zweiten Sender (12) ausgesendeten Terahertzstrahlung angeordneten Gegenstand (20) zu bestimmen.

3. Vorrichtung nach einem der vorhergehenden Ansprüche, **dadurch gekennzeichnet, dass** der erste Sender (10) und der erste Empfänger (10) auf derselben Seite eines den Gegenstand (20) während einer Messung aufnehmenden Messbereichs angeordnet sind, wobei auf einer gegenüberliegenden Seite des Messbereichs ein erster Reflektor (22) angeordnet ist, der dazu ausgebildet ist, von dem ersten Sender (10) ausgesendete Terahertzstrahlung nach Durchstrahlen des Gegenstands (20) zu dem ersten Empfänger (10) zurück zu reflektieren, und/oder dass der zweite Sender (12) und der zweite Empfänger (12) auf derselben Seite eines den Gegenstand (20) während einer Messung aufnehmenden Messbereichs angeordnet sind, wobei auf einer gegenüberliegenden Seite des Messbereichs ein zweiter Reflektor (24) angeordnet ist, der dazu ausgebildet ist, von dem zweiten Sender (12) ausgesendete Terahertzstrahlung nach Durchstrahlen des Gegenstands (20) zu dem zweiten Empfänger (12) zurück zu reflektieren.

4. Vorrichtung nach Anspruch 3, **dadurch gekennzeichnet, dass** der erste Sender (10) und der erste Empfänger (10) durch einen ersten Transceiver (10) gebildet sind und/oder dass der zweite Sender (12) und der zweite Empfänger (12) durch einen zweiten Transceiver (12) gebildet sind.

5. Vorrichtung nach einem der vorhergehenden Ansprüche, **dadurch gekennzeichnet, dass** die Auswerteeinrichtung (26) weiter dazu ausgebildet ist, eine erste Laufwegsdifferenz zwischen dem ersten gemessenen Laufweg und dem ersten Referenzlaufweg und eine zweite Laufwegsdifferenz zwischen dem zweiten gemessenen Laufweg und dem zweiten Referenzlaufweg zu bestimmen.

6. Vorrichtung nach einem der vorhergehenden Ansprüche, **dadurch gekennzeichnet, dass** die Auswerteeinrichtung (26) weiter dazu ausgebildet ist, bei der Bestimmung des Brechungsindex und/oder der Wanddicke die unterschiedlichen Winkel der ersten Hauptstrahlrichtung (14) und der zweiten Hauptstrahlrichtung (16) zu berücksichtigen.

7. Vorrichtung nach einem der vorhergehenden Ansprüche, **dadurch gekennzeichnet, dass** die Auswerteeinrichtung (26) weiter dazu ausgebildet ist, bei der Bestimmung des Brechungsindex und/oder der Wanddicke den Winkel der ersten Hauptstrahlrichtung (14) zu der Messebene (18) und den Winkel der zweiten Hauptstrahlrichtung (16) zu der Messebene (18) zu berücksichtigen.

8. Vorrichtung nach einem der vorhergehenden Ansprüche, **dadurch gekennzeichnet, dass** der erste Sender (10) und der zweite Sender (12) Terahertzstrahlung mit einer Bandbreite von weniger als 5 GHz, vorzugsweise weniger als 1 GHz, aussenden.

9. Verfahren zum Bestimmen des Brechungsindex und/oder der Wanddicke eines Gegenstands (20), vorzugsweise eines plattenförmigen Gegenstands (20), bei dem mit einem ersten Sender (10) Terahertzstrahlung mit einer Frequenz in einem Bereich von 1 GHz bis 10 THz entlang einer ersten Hauptstrahlrichtung (14) auf den Gegenstand (20) ausgesendet wird, und mit einem ersten Empfänger (10) die von dem ersten Sender (10) ausgesendete Terahertzstrahlung nach Durchstrahlen des Gegenstands (20) empfangen wird, aufweisend die Schritte:
• mit einem zweiten Sender (12) wird Terahertzstrahlung mit einer Frequenz in einem Bereich von 1 GHz bis 10 THz entlang einer zweiten Hauptstrahlrichtung (16) auf den Gegenstand (20) ausgesendet, wobei die erste und zweite Hauptstrahlrichtung (14, 16) unter unterschiedlichen Winkeln in Bezug auf eine dem ersten Sender (10) und eine dem zweiten Sender (12) gegenüberliegende Oberfläche (18) des Gegenstands (20) verlaufen, und mit einem zweiten Empfänger (12) wird die von dem zweiten Sender (12) ausgesendete Terahertzstrahlung nach Durchstrahlen des Gegenstands (20) empfangen, wobei der erste Sender (10) und der zweite Sender (12) Terahertzstrahlung mit einer Bandbreite von weniger als 10 GHz aussenden,
• aus den von dem ersten Empfänger (10) nach Durchstrahlen des Gegenstands (20) empfangenen Messsignalen wird ein erster gemessener Laufweg der Terahertzstrahlung zwischen dem ersten Sender (10) und dem ersten Empfänger (10) bestimmt und mit einem ersten Referenzlaufweg der Terahertzstrahlung zwischen dem ersten Sender (10) und dem ersten Empfänger (10) ohne Durchstrahlen des Gegenstands (20) verglichen, aus den von dem zweiten Empfänger (12) nach Durchstrahlen des Gegenstands (20) empfangenen Messsignalen wird ein zweiter gemessener Laufweg zwischen dem zweiten Sender (12) und dem zweiten Empfänger (12) bestimmt und mit einem zweiten Referenzlaufweg zwischen dem zweiten Sender (12) und dem zweiten Empfänger (12) ohne Durchstrahlen des Gegenstands (20) verglichen, und
• auf Grundlage der Vergleiche wird der Brechungsindex und/oder die Wanddicke des Gegenstands (20) bestimmt.

10. Verfahren nach Anspruch 9, **dadurch gekennzeichnet, dass** der erste Referenzlaufweg aus von dem ersten Empfänger (10) empfangenen Messsignalen ohne im Strahlengang der von dem ersten Sender (10) ausgesendeten Terahertzstrahlung angeordneten Gegenstand (20) bestimmt wird und/oder dass der zweite Referenzlaufweg aus von dem zweiten Empfänger (12) empfangenen Messsignalen ohne im Strahlengang der von dem zweiten Sender (12) ausgesendeten Terahertzstrahlung angeordneten Gegenstand (20) bestimmt wird.

11. Verfahren nach einem der Ansprüche 9 oder 10, **dadurch gekennzeichnet, dass** aus den Vergleichen eine erste Laufwegsdifferenz zwischen dem ersten gemessenen Laufweg und dem ersten Referenzlaufweg und eine zweite Laufwegsdifferenz zwischen dem zweiten gemessenen Laufweg und dem zweiten Referenzlaufweg bestimmt wird.

12. Verfahren nach einem der Ansprüche 9 bis 11, **dadurch gekennzeichnet, dass** bei der Bestimmung des Brechungsindex und/oder der Wanddicke die unterschiedlichen Winkel der ersten Hauptstrahlrichtung (14) und der zweiten Hauptstrahlrichtung (16) berücksichtigt werden.

13. Verfahren nach einem der Ansprüche 9 bis 12, **dadurch gekennzeichnet, dass** bei der Bestimmung des Brechungsindex und/oder der Wanddicke der Winkel der ersten Hauptstrahlrichtung (14) zu der dem ersten Sender (10) gegenüberliegenden Oberfläche (18) des Gegenstands (20) und der Winkel der zweiten Hauptstrahlrichtung (16) zu der dem zweiten Sender (12) gegenüberliegenden Oberfläche (18) des Gegenstands (20) berücksichtigt werden.

14. Verfahren nach einem der Ansprüche 9 bis 13, **dadurch gekennzeichnet, dass** der erste Sender (10) und der zweite Sender (12) Terahertzstrahlung mit einer Bandbreite von weniger als 5 GHz, vorzugsweise weniger als 1 GHz, aussenden.

15. Verfahren nach einem der Ansprüche 9 bis 14, **dadurch gekennzeichnet, dass** es mit einer Vorrichtung nach einem der Ansprüche 1 bis 8 durchgeführt wird.

## Claims

1. A device for determining the refractive index and/or wall thickness of an object (20), preferably a planar object (20), comprising a first transmitter (10) for terahertz radiation and a first receiver (10) for terahertz radiation, wherein the first transmitter (10) is designed to emit terahertz radiation having a frequency in a range of from 1 GHz to 10 THz in a first main beam direction (14) onto the object (20), and wherein the first receiver (10) is designed to receive the terahertz radiation emitted by the first transmitter (10) after said radiation has passed through the object (20), wherein
• a second transmitter (12) for terahertz radiation and a second receiver (12) for terahertz radiation are provided, wherein the second transmitter (12) is designed to emit terahertz radiation having a frequency in a range of from 1 GHz to 10 THz in a second main beam direction (16) onto the object (20), wherein the first and second main beam directions (14, 16) extend at different angles with respect to a measurement plane (18) that encompasses the object during a measurement, and wherein the second receiver (12) is designed to receive the terahertz radiation emitted by the second transmitter (12) after said radiation has passed through the object (20), wherein the first transmitter (10) and the second transmitter (12) emit terahertz radiation having a bandwidth of less than 10 GHz,
• an evaluation apparatus (26) is provided, which is designed to determine a first measured travel distance of the terahertz radiation between the first transmitter (10) and the first receiver (10) from the measurement signals received by the first receiver (10) after said radiation has passed through the object (20) and to compare said first measured travel distance with a first reference travel distance of the terahertz radiation between the first transmitter (10) and the first receiver (10) without said radiation having passed through the object (20), and to determine a second measured travel distance of the terahertz radiation between the second transmitter (12) and the second receiver (12) from the measurement signals received by the second receiver (12) after said radiation has passed through the object (20) and to compare said second measured travel distance with a second reference travel distance of the terahertz radiation between the second transmitter (12) and the second receiver (12) without said radiation having passed through the object (20), and
• the evaluation apparatus (26) is further designed to determine the refractive index and/or wall thickness of the object (20) on the basis of the comparisons.

2. The device according to claim 1, **characterized in that** the evaluation apparatus (26) is further designed to determine the first reference travel distance from measurement signals received by the first receiver (10) without an object (20) being arranged in the beam path of the terahertz radiation emitted by the first transmitter (10) and/or to determine the second reference travel distance from measurement signals received by the second receiver (12) without an object (20) being arranged in the beam path of the terahertz radiation emitted by the second transmitter (12).

3. The device according to one of the preceding claims, **characterized in that** the first transmitter (10) and the first receiver (10) are arranged on the same side of a measurement region that encompasses the object (20) during a measurement, wherein a first reflector (22) is arranged on an opposite side of the measurement region and is designed to reflect terahertz radiation emitted by the first transmitter (10) back to the first receiver (10) after said radiation has passed through the object (20), and/or **in that** the second transmitter (12) and the second receiver (12) are arranged on the same side of a measurement region that encompasses the object (20) during a measurement, wherein a second reflector (24) is arranged on an opposite side of the measurement region and is designed to reflect terahertz radiation emitted by the second transmitter (12) back to the second receiver (12) after said radiation has passed through the object (20).

4. The device according to claim 3, **characterized in that** the first transmitter (10) and the first receiver (10) are formed by a first transceiver (10) and/or **in that** the second transmitter (12) and the second receiver (12) are formed by a second transceiver (12).

5. The device according to one of the preceding claims, **characterized in that** the evaluation apparatus (26) is further designed to determine a first travel distance difference between the first measured travel distance and the first reference travel distance and a second travel distance difference between the second measured travel distance and the second reference travel distance.

6. The device according to one of the preceding claims, **characterized in that** the evaluation apparatus (26) is further designed to take into account the different angles of the first main beam direction (14) and the second main beam direction (16) when determining the refractive index and/or wall thickness.

7. The device according to one of the preceding claims, **characterized in that** the evaluation apparatus (26) is further designed to take into account the angle of the first main beam direction (14) with respect to the measurement plane (18) and the angle of the second main beam direction (16) with respect to the measurement plane (18) when determining the refractive index and/or wall thickness.

8. The device according to one of the preceding claims, **characterized in that** the first transmitter (10) and the second transmitter (12) emit terahertz radiation having a bandwidth of less than 5 GHz, preferably less than 1 GHz.

9. A method for determining the refractive index and/or wall thickness of an object (20), preferably a planar object (20), in which terahertz radiation having a frequency in a range of from 1 GHz to 10 THz is emitted in a first main beam direction (14) onto the object (20) by means of a first transmitter (10), and the terahertz radiation emitted by the first transmitter (10) is received by means of a first receiver (10) after passing through the object (20), comprising the following steps:
• terahertz radiation having a frequency in a range of from 1 GHz to 10 THz is emitted by means of a second transmitter (12) in a second main beam direction (16) onto the object (20), wherein the first and second main beam directions (14, 16) extend at different angles with respect to a surface (18) of the object (20) that is opposite the first transmitter (10) and opposite the second transmitter (12), and the terahertz radiation emitted by the second transmitter (12) is received by means of a second receiver (12) after passing through the object (20), wherein the first transmitter (10) and the second transmitter (12) emit terahertz radiation having a bandwidth of less than 10 GHz,
• a first measured travel distance of the terahertz radiation between the first transmitter (10) and the first receiver (10) is determined from the measurement signals received by the first receiver (10) after said radiation has passed through the object (20) and is compared with a first reference travel distance of the terahertz radiation between the first transmitter (10) and the first receiver (10) without said radiation having passed through the object (20), a second measured travel distance between the second transmitter (12) and the second receiver (12) is determined from the measurement signals received by the second receiver (12) after said radiation has passed through the object (20) and is compared with a second reference travel distance between the second transmitter (12) and the second receiver (12) without said radiation having passed through the object (20), and
• the refractive index and/or wall thickness of the object (20) is determined on the basis of the comparisons.

10. The method according to claim 9, **characterized in that** the first reference travel distance is determined from measurement signals received by the first receiver (10) without an object (20) being arranged in the beam path of the terahertz radiation emitted by the first transmitter (10) and/or **in that** the second reference travel distance is determined from measurement signals received by the second receiver (12) without an object (20) being arranged in the beam path of the terahertz radiation emitted by the second transmitter (12).

11. The method according to one of claims 9 or 10, **characterized in that** a first travel distance difference between the first measured travel distance and the first reference travel distance and a second travel distance difference between the second measured travel distance and the second reference travel distance is determined from the comparisons.

12. The method according to one of claims 9 to 11, **characterized in that** the different angles of the first main beam direction (14) and of the second main beam direction (16) are taken into account when determining the refractive index and/or wall thickness.

13. The method according to one of claims 9 to 12, **characterized in that** the angle of the first main beam direction (14) with respect to the surface (18) of the object (20) that is opposite the first transmitter (10) and the angle of the second main beam direction (16) with respect to the surface (18) of the object (20) that is opposite the second transmitter (12) are taken into account when determining the refractive index and/or wall thickness.

14. The method according to one of claims 9 to 13, **characterized in that** the first transmitter (10) and the second transmitter (12) emit terahertz radiation having a bandwidth of less than 5 GHz, preferably less than 1 GHz.

15. The method according to one of claims 9 to 14, **characterized in that** it is carried out using a device according to one of claims 1 to 8.

## Revendications

1. Dispositif de détermination de l'indice de réfraction et/ou de l'épaisseur d'une paroi d'un objet (20), de préférence d'un objet (20) en forme de plaque, comportant un premier émetteur (10) de rayonnement térahertz et un premier récepteur (10) de rayonnement térahertz, le premier émetteur (10) étant conçu pour émettre un rayonnement térahertz ayant une fréquence dans la plage de 1 GHz à 10 THz le long d'une première direction de rayonnement principale (14) vers l'objet (20), et le premier récepteur (10) étant conçu pour recevoir le rayonnement térahertz émis par le premier émetteur (10) après traversée de l'objet (20), dans lequel
• il est prévu un deuxième émetteur (12) de rayonnement térahertz et un deuxième récepteur (12) de rayonnement térahertz, le deuxième émetteur (12) étant conçu pour émettre un rayonnement térahertz ayant une fréquence dans une plage de 1 GHz à 10 THz le long d'une deuxième direction de rayonnement principale (16) vers l'objet (20), les première et deuxième directions de rayonnement principale (14, 16) s'étendant sous des angles différents par rapport à un plan de mesure (18) recevant l'objet lors d'une mesure, et le deuxième récepteur (12) étant conçu pour recevoir le rayonnement térahertz émis par le deuxième émetteur (12) après traversée de l'objet (20), le premier émetteur (10) et le deuxième émetteur (12) émettant un rayonnement térahertz présentant une largeur de bande inférieure à 10 GHz,
• il est prévu une unité d'évaluation (26) conçue pour déterminer, à partir des signaux de mesure reçus par le premier récepteur (10) après traversée de l'objet (20), un premier chemin mesuré du rayonnement térahertz entre le premier émetteur (10) et le premier récepteur (10), et pour le comparer avec un premier chemin de référence du rayonnement térahertz entre le premier émetteur (10) et le premier récepteur (10) sans traversée de l'objet (20), et pour déterminer un deuxième chemin mesuré du rayonnement térahertz entre le deuxième émetteur (12) et le deuxième récepteur (12) à partir des signaux de mesure reçus par le deuxième récepteur (12) après traversée de l'objet (20), et pour le comparer avec un deuxième chemin de référence du rayonnement térahertz entre le deuxième émetteur (12) et le deuxième récepteur (12) sans traversée de l'objet (20), et
• l'unité d'évaluation (26) est en outre conçue pour déterminer l'indice de réfraction et/ou l'épaisseur de paroi de l'objet (20) sur la base des comparaisons.

2. Dispositif selon la revendication 1, **caractérisé en ce que** l'unité d'évaluation (26) est en outre conçue pour déterminer le premier chemin de référence à partir de signaux de mesure reçus par le premier récepteur (10) sans objet (20) disposé dans le trajet optique du rayonnement térahertz émis par le premier émetteur (10), et/ou pour déterminer le deuxième chemin de référence à partir de signaux de mesure reçus par le deuxième récepteur (12) sans objet (20) disposé dans le trajet optique du rayonnement térahertz émis par le deuxième émetteur (12).

3. Dispositif selon l'une des revendications précédentes, **caractérisé en ce que** le premier émetteur (10) et le premier récepteur (10) sont disposés sur le même côté d'une région de mesure recevant l'objet (20) pendant une mesure, dans lequel un premier réflecteur (22), conçu pour renvoyer le rayonnement térahertz émis par le premier émetteur (10) vers le premier récepteur (10) après traversée de l'objet (20), est disposé sur un côté opposé de la région de mesure, et/ou **en ce que** le deuxième émetteur (12) et le deuxième récepteur (12) sont disposé sur le même côté d'une région de mesure recevant l'objet (20) pendant une mesure, dans lequel un deuxième réflecteur (12), conçu pour renvoyer le rayonnement térahertz émis par le deuxième émetteur (12) vers le deuxième récepteur (12) après traversée de l'objet (20), est disposé sur un côté opposé de la région de mesure.

4. Dispositif selon la revendication 3, **caractérisé en ce que** le premier émetteur (10) et le premier récepteur (10) sont constitués par un premier émetteur-récepteur (10) et/ou **en ce que** le deuxième émetteur (12) et le deuxième récepteur (12) sont constitués par un deuxième émetteur-récepteur (12).

5. Dispositif selon l'une des revendications précédentes, **caractérisé en ce que** l'unité d'évaluation (26) est en outre conçue pour déterminer une première différence de chemin entre le premier chemin mesuré et le premier chemin de référence, ainsi qu'une deuxième différence de chemin entre le deuxième chemin mesuré et le deuxième chemin de référence.

6. Dispositif selon l'une des revendications précédentes, **caractérisé en ce que** l'unité d'évaluation (26) est en outre conçue pour tenir compte des différents angles de la première direction de rayonnement principale (14) et de la deuxième direction de rayonnement principale (16) lors de la détermination de l'indice de réfraction et/ou de l'épaisseur de paroi.

7. Dispositif selon l'une des revendications précédentes, **caractérisé en ce que** l'unité d'évaluation (26) est en outre conçue pour tenir compte de l'angle de la première direction de rayonnement principale (14) par rapport au plan de mesure (18), ainsi que de l'angle de la deuxième direction de rayonnement principale (16) par rapport au plan de mesure (18), lors de la détermination de l'indice de réfraction et/ou de l'épaisseur de paroi.

8. Dispositif selon l'une des revendications précédentes, **caractérisé en ce que** le premier émetteur (10) et le deuxième émetteur (12) émettent un rayonnement térahertz présentant une largeur de bande inférieure à 5 GHz, de préférence inférieure à 1 GHz.

9. Procédé de détermination de l'indice de réfraction et/ou de l'épaisseur de paroi d'un objet (20), de préférence d'un objet (20) en forme de plaque, dans lequel un rayonnement térahertz ayant une fréquence dans la plage de 1 GHz à 10 THz est émis vers l'objet (20) le long d'une première direction de rayonnement principale (14), au moyen d'un premier émetteur (10), et le rayonnement térahertz émis par le premier émetteur (10) est reçu au moyen d'un premier récepteur (10) après traversée de l'objet (20), présentant les étapes suivantes :
• au moyen d'un deuxième émetteur (12), un rayonnement térahertz ayant une fréquence dans une plage de 1 GHz à 10 THz est émis vers l'objet (20) le long d'une deuxième direction de rayonnement principale (16), les première et deuxième directions de rayonnement principales (14, 16) s'étendant sous des angles différents par rapport à une surface (18) de l'objet (20) opposée au premier émetteur (10) et au deuxième émetteur (12), et le rayonnement térahertz émis par le deuxième émetteur (12) est reçu au moyen d'un deuxième récepteur (12) après traversée de l'objet (20), le premier émetteur (10) et le deuxième émetteur (12) émettant un rayonnement térahertz présentant une largeur de bande inférieure à 10 GHz,
• à partir des signaux de mesure reçus par le premier récepteur (10) après traversée de l'objet (20), un premier chemin mesuré du rayonnement térahertz entre le premier émetteur (10) et le premier récepteur (10) est déterminé et comparé avec un premier chemin de référence du rayonnement térahertz entre le premier émetteur (10) et le premier récepteur (10) sans traversée de l'objet (20), et un deuxième chemin mesuré du rayonnement térahertz entre le deuxième émetteur (12) et le deuxième récepteur (12) est déterminé à partir des signaux de mesure reçus par le deuxième récepteur (12) après traversée de l'objet (20) et comparé avec un deuxième chemin de référence du rayonnement térahertz entre le deuxième émetteur (12) et le deuxième récepteur (12) sans traversée de l'objet (20), et
• l'indice de réfraction et/ou l'épaisseur de paroi de l'objet (20) sont déterminés sur la base des comparaisons.

10. Procédé selon la revendication 9, **caractérisé en ce que** le premier chemin de référence est déterminé à partir de signaux de mesure reçus par le premier récepteur (10) sans objet (20) disposé dans le trajet optique du rayonnement térahertz émis par le premier émetteur (10), et/ou **en ce que** le deuxième chemin de référence est déterminé à partir de signaux de mesure reçus par le deuxième récepteur (12) sans objet (20) disposé dans le trajet optique du rayonnement térahertz émis par le deuxième émetteur (12).

11. Procédé selon l'une des revendications 9 ou 10, **caractérisé en ce qu'**une première différence de chemin entre le premier chemin mesuré et le premier chemin de référence ainsi qu'une deuxième différence de chemin entre le deuxième chemin mesuré et le deuxième chemin de référence sont déterminées à partir des comparaisons.

12. Procédé selon l'une des revendications 9 à 11, **caractérisé en ce que** les différents angles de la première direction de rayonnement principale (14) et de la deuxième direction de rayonnement principale (16) sont pris en compte lors de la détermination de l'indice de réfraction et/ou de l'épaisseur de paroi.

13. Procédé selon l'une des revendications 9 à 12, **caractérisé en ce que** l'angle de la première direction de rayonnement principale (14) par rapport à la surface (18) de l'objet (20) opposée au premier émetteur (10), ainsi que l'angle de la deuxième direction de rayonnement principale (16) par rapport à la surface (18) de l'objet (20) opposée au deuxième émetteur (12), sont pris en compte lors de la détermination de l'indice de réfraction et/ou de l'épaisseur de paroi.

14. Procédé selon l'une des revendications 9 à 13, **caractérisé en ce que** le premier émetteur (10) et le deuxième émetteur (12) émettent un rayonnement térahertz présentant une largeur de bande inférieure à 5 GHz, de préférence inférieure à 1 GHz.

15. Procédé selon l'une des revendications 9 à 14, **caractérisé en ce qu'**il est mis en œuvre au moyen d'un dispositif selon l'une des revendications 1 à 8.
